# FASCICULE DE BREVET EUROPEEN

(11) **EP 1 553 282 B1**
(45) Date de publication et mention de la délivrance du brevet: **03.10.2007**
(21) Numéro de dépôt: 05300019.6
(22) Date de dépôt: 11.01.2005
(51) Int. Cl.: F02K 1/82, F02K 1/12

(54) **Dispositif d'alimentation en air de refroidissement de volets de tuyère**
Vorrichtung zur Anbringung von Kühlluft an Düseklappen
Device for feeding cooling air to flap nozzle

(30) Priorité: 12.01.2004 FR 0400219
(43) Date de publication de la demande: 13.07.2005
(73) Titulaire: SNECMA, 75015 Paris (FR)
(72) Inventeur: Lapergue, Guy, 77950, Rubelles (FR); Curtelin, Raphael, 77720, Saint Méry (FR); Feder, Didier, 77000, Melun (FR)
(74) Mandataire: David, Daniel

(56) Documents cités:
- DE-C- 337 119
- US-A- 5 255 849
- US-A- 5 603 531
- US-A- 5 775 589
- US-B1- 6 301 877

## Description

L'invention concerne un dispositif d'alimentation en air de refroidissement d'un volet de tuyère d'éjection d'un turboréacteur.

En aval de sa turbine, un turboréacteur comprend un canal d'éjection, comprenant un carter d'échappement et une tuyère. Le canal d'éjection a pour rôle de transformer l'énergie de pression restante, en sortie de turbine, en énergie cinétique, par détente des gaz de combustion.

Il est commun d'utiliser une tuyère à section variable, afin d'adapter sa section au fonctionnement du moteur. Les tuyères à section variable sont utilisées dans les turboréacteurs, qu'ils soient avec ou sans réchauffe. La réchauffe, ou post-combustion, consiste à injecter du carburant dans le canal d'éjection afin de provoquer la combustion du gaz provenant de la turbine, lequel contient encore de l'oxygène, et ainsi augmenter la poussée du turboréacteur.

Les tuyères à section variable peuvent être de différents types, notamment axisymétriques, bidimensionnelles ou encore orientables. L'invention s'applique à tous les types de tuyères, et plus particulièrement aux tuyères axisymétriques convergentes-divergentes, c'est-à-dire les tuyères dont la portion amont est convergente et la portion aval divergente, pour un turboréacteur avec réchauffe.

Les tuyères axisymétriques convergentes-divergentes sont utilisées pour des applications supersoniques, la vitesse d'un gaz supersonique augmentant dans une tuyère divergente. Elle sont constituées d'une pluralité de volets, disposés en couronne afin d'obtenir une section globalement circulaire, et se recouvrant partiellement. Un volet sur deux, appelé volet commandé, est actionné par un vérin, tandis qu'entre deux volets commandés se trouve un volet asservi, entraîné par les volets commandés.

Lors de la réchauffe, la température des gaz peut atteindre environ 2000°C. Le refroidissement des volets de la tuyère est donc nécessaire, d'une part, pour augmenter leur durée de vie, d'autre part, pour réduire la signature thermique infrarouge de la tuyère, qui doit être minimale dans les applications militaires.

L'art antérieur, en particulier les documents US 5, 255, 849 et US 5, 775, 589, propose un dispositif de refroidissement par circulation d'air le long de la paroi interne des volets, qui sont creux. L'alimentation en air des volets divergents comprend des canalisations de forme semi-circulaire, l'une faisant saillie hors d'un volet de la portion convergente de la tuyère, l'autre faisant saillie hors d'un volet de la portion divergente de la tuyère et étant engagée dans la première, afin de mettre en communication les cavités des volets concernés. L'air de refroidissement, provenant du flux secondaire du turboréacteur, permet donc de refroidir le volet convergent, tout d'abord, puis le volet divergent, grâce à la canalisation susmentionnée. Les canalisations sont de même rayon et centre de courbure, pouvant ainsi coulisser l'une dans l'autre, afin de compenser les variations d'angle entre les deux portions de tuyère lors de l'actionnement des vérins.

Toutefois, dans ce dispositif de refroidissement, l'air de refroidissement des volets divergents provient des volets convergents et a par conséquent déjà été utilisé pour le refroidissement de ces derniers. Il serait préférable d'approvisionner directement les volets divergents en air de refroidissement afin d'augmenter son efficacité. Cependant, il n'est pas possible d'utiliser des canalisations du type de celles présentées plus haut, dont une ferait saillie hors d'un volet divergent et l'autre hors d'une cavité du moteur approvisionnée en air de refroidissement du flux secondaire, puisqu'entre un volet divergent et une partie du moteur qui n'est pas un volet convergent, le mouvement n'est pas un simple mouvement de rotation. En outre, l'encombrement serait trop grand, dans une zone du moteur où les espaces sont confinés.

La présente invention vise à pallier ces inconvénients.

A cet effet, l'invention concerne un dispositif d'alimentation, en air de refroidissement, d'un volet de tuyère d'éjection d'un turboréacteur, comprenant une canalisation reliant le volet à une source d'air de refroidissement, caractérisé par le fait que la canalisation comprend au moins une portion télescopique et une liaison à rotule.

Par rotule, sera désignée une liaison mécanique ne comprenant des degrés de liberté qu'en rotation. De préférence, la liaison à rotule comprendra trois degrés de rotation, mais elle pourra éventuellement être conçue pour n'en comporter qu'un ou deux.

De préférence, la canalisation comprend deux liaisons à rotule et une portion télescopique.

Avantageusement, la portion télescopique remplit également une fonction de trompe.

En particulier, la source d'air de refroidissement comprend une canalisation, à la périphérie du carter du canal d'éjection, apportant de l'air du flux secondaire du turboréacteur.

Grâce à l'invention, il est possible d'alimenter aisément les volets divergents de la tuyère en air de refroidissement, sans contraintes mécaniques liées au fonctionnement, quelle que soit la source à laquelle on relie les volets.

Le dispositif d'alimentation s'adapte en outre à tout type de tuyère ; il est notamment possible d'alimenter en air de refroidissement les volets d'une tuyère axisymétrique convergente, les volets convergents ou divergents d'une tuyère axisymétrique convergente-divergente, les volets d'une tuyère bidimensionnelle ou les volets d'une tuyère orientable. Les avantages sont nombreux, tant dans la mise en place du dispositif d'alimentation de l'invention que dans sa fabrication, cette dernière pouvant être standardisée pour tous les types de tuyères. En particulier, il est également possible, avec le dispositif d'alimentation de l'invention, de relier les volets convergents d'une tuyère convergente-divergente à ses volets divergents, comme dans l'art antérieur cité, de façon plus simple, car l'usinage des pièces nécessite moins de précision que dans ce cas, où les rayons et centres de courbure doivent être strictement identique, pour éviter tout effort ou frottement.

De surcroît, la canalisation du dispositif d'alimentation de l'invention, du fait de sa structure, absorbe les contraintes de vibrations et de dilatations liées au fonctionnement du turboréacteur.

L'invention sera mieux comprise à l'aide de la description suivante de la forme de réalisée préférée du dispositif d'alimentation de l'invention, en référence au dessin annexé, sur lequel :
- la figure 1 représente une vue en perspective de face d'une tuyère de turboréacteur muni de la forme de réalisation préférée du dispositif d'alimentation de l'invention ;
- la figure 2 représente une vue de profil en coupe du dispositif d'alimentation de la figure 1, dans une première position ;
- la figure 3 représente une vue de profil en coupe du dispositif d'alimentation de la figure 2, dans une deuxième position ;
- la figure 4 représente une vue en perspective du dispositif d'alimentation de la figure 2, et
- la figure 5 représente une vue en perspective du dispositif d'alimentation de la figure 3.

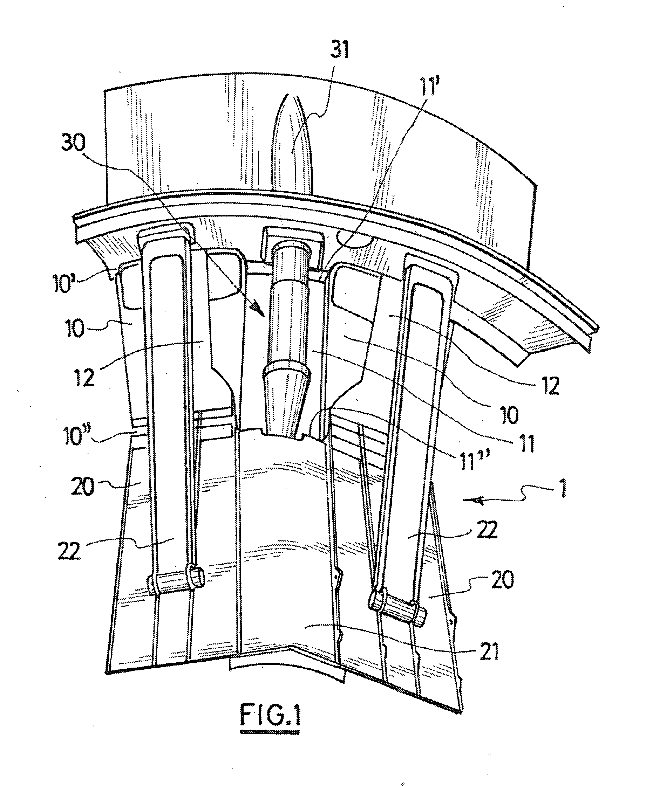

En référence à la figure 1, le dispositif d'alimentation de l'invention est agencé, dans sa forme de réalisation préférée, sur une tuyère 1 axisymétrique convergente-divergente d'un turboréacteur avec réchauffe. La tuyère 1 est montée sur la partie aval du carter 2 du canal d'éjection du turboréacteur. La tuyère 1 comporte des volets convergents, commandés 10 ou asservis 11, et des volets divergents, commandés 20 ou asservis 21.

Les volets convergents 10, 11 sont reliés, en amont, au carter 2, par des charnières 10', 11', respectivement, autour desquelles ils peuvent pivoter, chaque charnière 10', 11' s'étendant suivant un axe perpendiculaire à l'axe de la tuyère 1. En aval, ils sont reliés, par des charnières 10", 11", respectivement, aux volets divergents 20, 21. Chaque charnière aval 10", 11" est parallèle, dans le plan du volet 10, 11 auquel elle appartient, à la charnière amont 10', 11' correspondante.

Les volets convergents 10, 11 sont placés en couronne autour de l'axe de la tuyère 1, de façon à former une section globalement circulaire, les volets commandés 10 et asservis 11 étant disposés en alternance à la périphérie de la couronne. Chaque volet commandé 10 est commandé par une biellette 12, actionnée pour faire pivoter le volet 10 autour de l'axe de sa charnière amont 10'. Lors de l'actionnement des biellettes 12, les volets commandés 10 pivotent et entraînent en pivotement avec eux les volets asservis 11, chaque volet asservi 11 étant entouré de deux volets commandés 10.

Les volets divergents 20, 21 sont également disposés en couronne autour de l'axe de la turbine, et sont maintenus de leur côté amont, par les charnières 10", 11" aux volets convergents 10, 11. Chaque volet divergent commandé 20 est relié à un volet convergent commandé 10 et chaque volet divergent asservi 21 est relié à un volet convergent asservi 11. De la même façon que pour la couronne de volets convergents, la couronne de volets divergents consiste donc en une alternance de volets commandés 20 et asservis 21.

Les volets divergents commandés 20 sont commandés par des biellettes 22, d'une façon bien connue de l'homme du métier. Chaque volet divergent asservi 21 se situant entre deux volets divergents commandés 20, il suit le mouvement imposé par les volets commandés 20. Les mouvements des volets divergents 20, 21 ne sont pas des mouvements de pivotement simple, mais la composition de mouvements de pivotement autour des charnières 10", 11" et de rotation autour des charnières 10', 11'.

Dans la forme de réalisation de l'invention illustrée par les figures, les volets divergents asservis 21 sont creux, tandis que les volets divergents commandés 20 sont pleins. Une telle configuration est choisie du fait que, les volets divergents commandés 20 recouvrant, en fonction de la section de tuyère 1 désirée, soit partiellement soit totalement les volets divergents asservis 21, c'est le refroidissement de ces derniers qui est déterminant. Toutefois, si l'invention s'applique ici à des canalisations utilisées pour le refroidissement des volets divergents asservis, il va de soi qu'elle peut s'appliquer à toute sorte de volets, divergents commandés, convergents ou autres, quelle que soit la nature de la tuyère ou de la commande de ses volets. En l'espèce, selon un mode de réalisation particulier, les volets divergents commandés 20 sont creux et alimentés en air de refroidissement par les biellettes 12 de commande des volets convergents commandés 10, chaque biellette 12 étant alors agencée de façon à être creuse, reliée en amont à une source de refroidissement et en aval, d'une part fixée à un volet convergent commandé 10 pour l'actionner, d'autre part débouchant dans la partie amont d'un volet divergent commandé 20 pour l'alimenter en air de refroidissement.

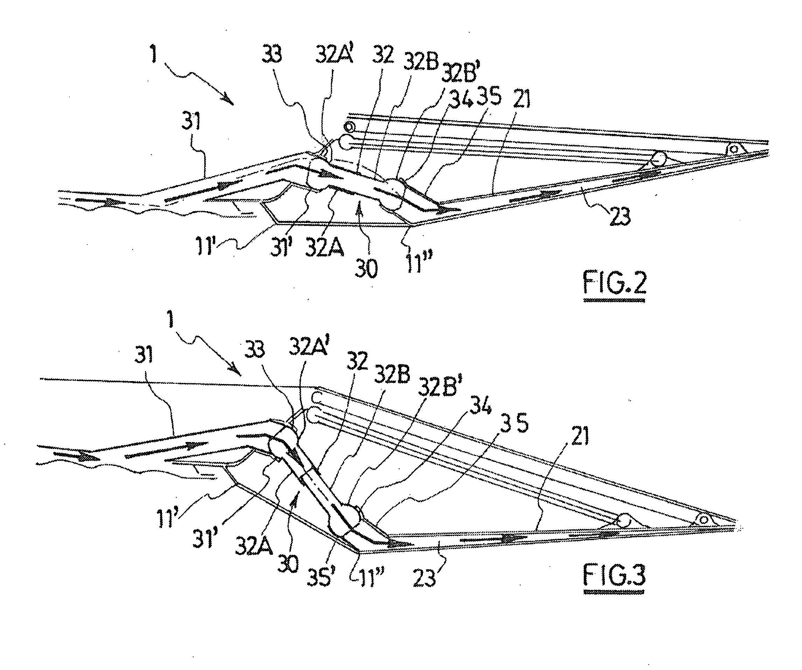

En référence à la figure 2, une canalisation 30 débouche sur chaque volet divergent asservi 21. Cette canalisation permet d'alimenter en air de refroidissement la cavité 23 ménagée dans l'épaisseur du volet 21. Cet air peut, grâce à la canalisation 30 de l'invention, provenir de diverses parties amont du moteur, par exemple du compresseur. Un système de canalisations 31 à la périphérie du turboréacteur permet de guider l'air de refroidissement depuis son point de prélèvement jusqu'aux abords de la tuyère 1, constituant pour cette dernière une source d'air de refroidissement 31. Ces sources d'air de refroidissement 31 débouchent à proximité de la tuyère 1, plus précisément ici à l'aplomb des volets convergents asservis 11. Les sources d'air 31 sont mises en communication avec les cavités internes 23 des volets divergents asservis 21 grâce à des canalisations 30 pouvant suivre tous les mouvements des volets par rapport aux canalisations 31, fixes par rapport au carter 2 de la tuyère 1. Ces mouvements sont la composition de divers mouvements élémentaires, et sont donc complexes.

En l'espèce, la source d'air de refroidissement 31 comporte, à proximité des volets convergents 10, 11, un bec de séparation permettant de diriger une partie de l'air de refroidissement vers les volets convergents 10, 11, leur refroidissement étant simplement assuré par une ouverture, à proximité de ces volets 10, 11, par laquelle l'air vient refroidir la surface interne de ces volets 10, 11, et une autre partie de l'air vers les canalisations 30 débouchant sur les volets divergents asservis 21.

Selon le mode de réalisation particulier dans lequel les volets divergents commandés 20 sont alimentés en air de refroidissement par les biellettes 12 d'actionnement des volets convergents commandés 10, ces biellettes 12 débouchent également en amont dans la source d'air de refroidissement 31, l'air de refroidissement étant à cet endroit dirigé, d'une part vers les biellettes 12, d'autre part vers les volets convergents commandés 10 de la même façon que précédemment.

Afin de pouvoir suivre n'importe quel mouvement, chaque canalisation 30 comporte une portion télescopique 32 et deux liaisons à rotule 33, 34, l'une 33 reliant la canalisation 30 à la source d'air de refroidissement 31, l'autre reliant la canalisation 30 à la cavité interne 23 du volet divergent asservi 21, par une portion de canalisation 35 faisant saillie hors du plan du volet 21. La portion télescopique 32 se situe entre les deux liaisons à rotule 33, 34.

La portion télescopique 32 est formée de deux tubes 32A et 32B pouvant coulisser l'un dans l'autre par une extrémité. A l'autre extrémité, chaque tube 32A, 32B comprend une tête avec une portion de surface extérieure sphérique 32A', 32B'. La tête 32A' est insérée dans l'élément tubulaire 31. Cet élément 31 comporte une portion d'extrémité à surface intérieure sphérique 31' dans laquelle est logée la tête 32A'. Ensemble, la portion 31' et la tête sphérique 32A' forment une liaison à rotule 33. Le tube est retenu axialement mais peut pivoter par rapport à l'élément 31. La tête 32B' est insérée dans l'élément tubulaire 35. Cet élément 35 comporte une portion d'extrémité à surface intérieure sphérique 35' dans laquelle est logée la tête 32B'. Ensemble, la portion 35' et la tête sphérique 32B' forment une liaison à rotule 34. Le tube est retenu axialement mais peut pivoter par rapport à l'élément 35.

Sur la figure 3, la canalisation 30 se trouve dans une autre position, suite à un actionnement des biellettes 12, 22 et donc à un changement de position des volets 10, 11, 20, 21. Afin de maintenir la communication entre la source d'air de refroidissement 31 et la portion de canalisation saillante 35 du volet 21, la canalisation 30 s'adapte à la nouvelle position du volet 21 par rapport à la source d'air 31, et suit le mouvement par rotation autour des liaisons à rotule 33, 34 et, dans ce cas, allongement de sa longueur au niveau de la portion télescopique 32.

Dans une autre forme de réalisation de l'invention, la tête amont 32A' participe à la formation, de la même façon que précédemment, d'une liaison rotule à trois degrés de liberté, et est montée par emmanchement dans la portion d'extrémité à surface intérieure sphérique 31' de l'élément tubulaire 31, ou canalisation 31, par le côté amont, étant ainsi retenue axialement contre elle. La tête aval 32B' est quant à elle rendue solidaire de la portion à surface intérieure sphérique 35' de l'élément tubulaire 35, ou canalisation 35, solidaire du volet divergent 21, par un axe transversal à l'axe du turboréacteur s'étendant au travers de la tête aval 32B' et de l'élément tubulaire 35. Ainsi, la tête aval 32B' est retenue axialement par cet axe et peut pivoter autour de lui ; dans ce cas, cette liaison rotule 34 ne comporte qu'un degré de liberté.

La canalisation 30 est dimensionnée de façon à ce que la gamme de longueurs pouvant être prises par sa portion télescopique 32 et la gamme d'angles pouvant être pris par ses liaisons à rotule 33, 34 soient suffisantes au suivi de l'ensemble des positions pouvant être prises par les volets.

Sur les figures 2 et 3, les flèches illustrent le trajet de l'air de refroidissement depuis les sources d'air 31 jusque dans les volets 21.

L'évacuation de l'air de refroidissement peut être réalisée de diverses façons : l'air peut par exemple être évacué au bord de fuite des volets 21, ou encore par des perforations sur la face chaude, ou interne, de ces derniers, afin d'être réinjecté directement dans la veine de gaz. L'évacuation n'est pas représentée sur les figures.

La portion télescopique 32 peut être agencée de façon à faire également office de trompe, c'est-à-dire, grâce à un jeu entre les tubes télescopiques, à faire appel d'air afin qu'une partie de l'air extérieur à la canalisation 30 soit entraînée et se mélange à l'air de refroidissement circulant dans la canalisation 30.

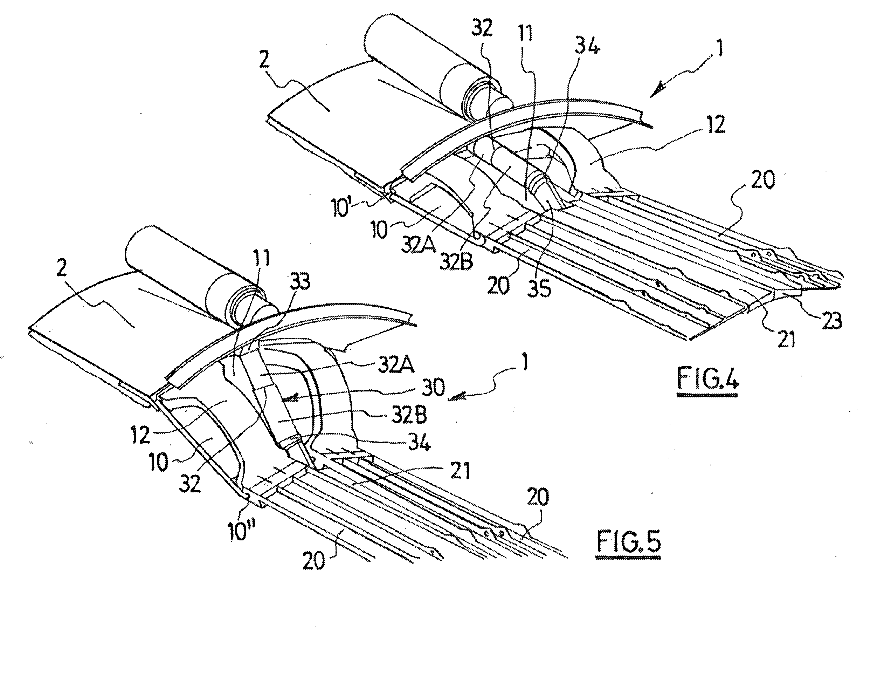

Les figures 4 et 5 illustrent en perspective les deux positions des figures 2 et 3. Sont ainsi plus clairement visibles les raisons pour lesquelles, dans la forme de réalisation préférée de l'invention, seuls les volets divergents asservis 21 sont agencés avec les canalisations 30 : d'une part, lorsque les volets commandés 20 recouvrent les volets asservis 21, ces derniers font écran entre les volets commandés et la veine de gaz chaud, d'autre part, pour des raisons d'encombrement, il est plus simple de ménager les canalisations 30 au-dessus des volets convergents 11 qui ne sont pas commandés par des biellettes 12.

Il faut toutefois rappeler que les canalisations 30 de l'invention peuvent être appliquées à tous types de volets de tuyère.

## Revendications

1. Dispositif d'alimentation en air de refroidissement d'un volet (21) de tuyère d'éjection (1) d'un turboréacteur, comprenant une canalisation (30) reliant le volet (21) à une source d'air de refroidissement (31), **caractérisé par le fait que** la canalisation (30) comprend au moins une portion télescopique (32) et une liaison à rotule (33, 34), de manière à pouvoir suivre les mouvements du volet (21) par rapport à la source d'air de refroidissement (31).

2. Dispositif selon la revendication 1, dans lequel le volet (21) est un volet divergent asservi (21) d'une tuyère convergente-divergente.

3. Dispositif selon l'une des revendications 1 ou 2, dans lequel la canalisation (30) comprend deux liaisons à rotule (33, 34) et une portion télescopique (32).

4. Dispositif selon la revendication 3, dans lequel la portion télescopique (32) se situe entre les deux liaisons à rotule (33, 34).

5. Dispositif selon l'une des revendications 1 à 4, dans lequel la portion télescopique (32) remplit également une fonction de trompe.

6. Dispositif selon l'une des revendications 1 à 5, dans laquelle la source d'air de refroidissement comprend une canalisation (31), à la périphérie du carter (2) du canal d'éjection du turboréacteur, apportant de l'air du flux secondaire du turboréacteur.

7. Tuyère de turboréacteur, comportant au moins un volet (21) et un dispositif d'alimentation en air de refroidissement (30) du volet (21) selon l'une des revendications 1 à 6.

8. Turboréacteur, comprenant une tuyère (1) à section variable munie d'un dispositif d'alimentation en air de refroidissement (30) selon l'une des revendications 1 à 6.

9. Turboréacteur selon la revendication 7, dont la tuyère fait partie de l'un des groupes de tuyères suivants : tuyères convergentes, tuyères convergentes-divergentes, tuyères bidimensionnelles, tuyères orientables.

## Claims

1. Device for supplying cooling air to a flap (21) of a turbojet engine exhaust nozzle (1), comprising a tube (30) connecting flap (21) to a source of cooling air (31), **characterized by** the fact that the tube (30) comprises at least one telescopic portion (32) and one ball-joint connection (33, 34), so as to be able to follow the movements of the flap (21) with respect to the source of cooling air (31).

2. Device according to claim 1, wherein the flap (21) is a servo-controlled divergent flap (21) of a convergent-divergent exhaust nozzle.

3. Device according to claims 1 or 2, wherein the tube (30) comprises two ball-joint connections (33, 34) and a telescopic portion (32).

4. Device according to claim 3, wherein the telescopic portion (32) is located between the two ball-joint connections (33, 34).

5. Device according to one of claims 1 to 4, wherein the telescopic portion (32) also acts as a pump.

6. Device according to one of claims 1 to 5, wherein the source of cooling air comprises a tube (31) on the periphery of the housing (2) of the exhaust channel of the turbojet engine, bringing air from the secondary flow of the turbojet engine.

7. Exhaust nozzle of a turbojet engine, comprising at least one flap (21) and a device for supplying cooling air (30) to the flap (21) according to one of claims 1 to 6.

8. Turbojet engine comprising a variable section exhaust nozzle (1) equipped with a cooling air supply device (30) according to one of claims 1 to 6.

9. Turbojet engine according to claim 8, wherein the exhaust nozzle belongs to one of the following groups of exhaust nozzles: convergent exhaust nozzles, convergent-divergent exhaust nozzles, bidimensional exhaust nozzles, pivotable exhaust nozzles.

## Patentansprüche

1. Vorrichtung zur Zuführung von Kühlungsluft zu einer Klappe (21) einer Ausstoßdüse (1) eines Turbotriebwerks, bestehend aus einer Rohrleitung (30), die die Klappe (21) mit einer Kühlungsluftquelle (31) verbindet,
**dadurch gekennzeichnet,**
**dass** die Rohrleitung (30) mindestens einen teleskopartigen Abschnitt (32) und eine Kugelgelenkverbindung (33, 34) aufweist, so dass sie den Bewegungen der Klappe (21) gegenüber der Kühlungsluftquelle (31) folgen kann.

2. Vorrichtung nach Anspruch 1, bei der die Klappe (21) eine gesteuerte, divergente Klappe (21) einer konvergent-divergenten Düse ist.

3. Vorrichtung nach einem der Ansprüche 1 oder 2, bei der die Rohrleitung (30) zwei Kugelgelenkverbindungen (33, 34) und einen teleskopartigen Abschnitt (32) aufweist.

4. Vorrichtung nach Anspruch 3, bei der der teleskopartige Abschnitt (32) sich zwischen den beiden Kugelgelenkverbindungen (33, 34) befindet.

5. Vorrichtung nach einem der Ansprüche 1 bis 4, bei der der teleskopartige Abschnitt (32) auch eine Pumpfunktion erfüllt.

6. Vorrichtung nach einem der Ansprüche 1 bis 5, bei der die Kühlungsluftquelle an der Außenlinie des Gehäuses (2) des Ausstoßkanals des Turbotriebwerks eine Rohrleitung (31) umfasst, die Luft des Mantelstroms des Turbotriebwerks heranführt.

7. Turbotriebwerksdüse, die mindestens eine Klappe (21) und eine Vorrichtung zur Zuführung von Kühlungsluft (30) zu der Klappe (21) nach einem der Ansprüche 1 bis 6 aufweist.

8. Turbotriebwerk mit einer Düse (1) mit variablem Querschnitt, die mit einer Vorrichtung zur Zuführung von Kühlungsluft (30) nach einem der Ansprüche 1 bis 6 versehen ist.

9. Turbotriebwerk nach Anspruch 8, dessen Düse zu einer der folgenden Gruppen von Düsen gehört: konvergente Düsen, konvergent-divergente Düsen, zweidimensionale Düsen, verstellbare Düsen.
